# EUROPÄISCHE PATENTSCHRIFT

(11) **EP 1 136 517 B1**
(45) Veröffentlichungstag und Bekanntmachung des Hinweises auf die Patenterteilung: **03.08.2005**
(21) Anmeldenummer: 01103408.9
(22) Anmeldetag: 14.02.2001
(51) Int. Cl.: C08J 3/12, C08G 85/00, C08F 8/06

(54) **Verfahren zur Erhöhung der Effektivität der Zerkleinerung von Schüttgütern durch Oxidation**
Process for improving the comminution of bulk material by oxidation
Procédé pour améliorer le broyage des matériaux en vrac par oxydation

(30) Priorität: 11.03.2000 DE 10012010
(43) Veröffentlichungstag der Anmeldung: 26.09.2001
(73) Patentinhaber: SIEMENS AKTIENGESELLSCHAFT, 80333 München (DE)
(72) Erfinder: Mientkewitz, Olaf, 65779 Kelkheim (DE); Schweers, Elke, Dr., 65812 Bad Soden (DE); Bauer, Ulrich, 65843 Sulzbach (DE); Gursky, Helmut, 60489 Frankfurt (DE); Müller, Hubert, Dr., 65929 Frankfurt (DE); Drögemeier, Raimo, Dr., 65824 Schwalbach (DE)
(74) Vertreter: Berg, Peter, Dipl.-Ing.

(56) Entgegenhaltungen:
- FR-A- 2 685 339
- US-A- 5 264 640
- US-A- 5 373 067
- US-A- 5 772 777

## Beschreibung

Die Erfindung betrifft ein Verfahren zur Zerkleinerung von Schüttgütern aus künstlichen Polymeren, die kein gummielastisches Verhalten besitzen, durch mechanische, thermische oder elektromagnetische Beanspruchung der Schüttgüter.

Die Erfindung betrifft auch ein Verfahren zur Zerkleinerung von Schüttgütern aus künstlichen Polymeren, die gummielastisches Verhalten besitzen.

Die Erfindung betrifft ein Verfahren zur Erhöhung der Effektivität der Zerkleinerung von Schüttgütern und zwar insbesondere zur Erhöhung des Durchsatzes, einer Senkung der notwendigen Zerkleinerungsarbeit und / oder des Erzielens von Partikelgrößen, die ohne dieses Verfahren nur mit hohem Energieaufwand oder gar nicht zu erzeugen sind.

Für viele Anwendungen ist es notwendig, daß die Feststoffe in bestimmten Feinheiten vorliegen. Notwendig sind definierte Partikelgrößen etwa für die Einstellung einer Lösegeschwindigkeit, für das Einbinden von Füllstoffen in Folien, für das Herstellen von stabilen Suspensionen oder für die Ermöglichung von nachgeschalteten Prozessen (z. B. Trocknen, Mischen oder Fördern). Eine Möglichkeit definierte Feinheiten einzustellen ist die Zerkleinerung von gröberen Partikelgrößen des Feststoffes. Häufig ist das auch die einzige Möglichkeit mit den Mitteln der mechanischen Verfahrenstechnik, da das Schüttgut nur in gröberen Partikelgrößen auf Grund des Herstellprozesses oder der Genese vorliegt.

Schüttgüter sind nur mit hohem Energieaufwand bis auf die geforderten Feinheiten zu zerkleinern. Die Ursache dafür ist in den allgemeinen Gesetzen der Bruchmechanik und damit verbunden in dem Materialverhalten der Feststoffe zu finden. So kommt es zunehmend zu plastischen Verformungen, wenn die Partikelgröße der beanspruchten Partikeln abnimmt. Dieses liegt in der mit zunehmender Feinheit auftretenden Verarmung an bruchauslösenden Fehlstellen.

Dadurch werden bei der Zerkleinerung die nur zu einer plastischen Verformung führenden Scherspannungen eher als die Zugspannungen, die zu Sprödbrüchen führen können, erreicht. Mit abnehmender Partikelgröße kommt es auch bei Stoffen mit makroskopisch sehr sprödem Stoffverhalten zunehmend zu plastischen und / oder elastischen Verformungen. Diese Erscheinung tritt auch auf, wenn man gröbere Partikel in sehr kleinen Volumenbereichen beansprucht (Mikroplastizität). Bei sehr feinen Partikeln existiert eine Grenze, unter der nur noch plastische Verformung auftritt. Diese Grenze ist unter dem Begriff Mahlbarkeitsgrenze bekannt. Quarz zeigt dieses Verhalten bei ca. 1 µm und Calcit bei ca. 3 - 5 µm bei Raumbedingungen. Die Mahlbarkeitsgrenze bei Raumbedingungen ist für Stoffe mit zähem Stoffverhalten (z. B. Polymere) noch merklich zu gröberen Partikeln verschoben. Die Zerkleinerung von solchen Stoffen stellt damit ein technisches Problem dar.

Es wurden verschiedene Vorschläge für Verfahren zur Zerkleinerung derartiger Stoffe gemacht.

Bei der sogenannten kryogenen Zerkleinerung werden Polymere unterhalb ihrer Glastemperatur zerkleinert. Das Materialverhalten ändert sich dabei von elastisch-plastisch zu spröd. Dies bedingt eine deutliche Verringerung der Mahlbarkeitsgrenze und damit der notwendigen Zerkleinerungsenergie. Die Grenzen dieses Verfahrens liegen im Energieverbrauch für die Kühlung und darin, daß bestimmte Stoffe bei den technisch beherrschbaren und ökonomisch vertretbaren Temperaturen keinen Übergang im Materialverhalten von elastisch-plastisch nach spröd zeigen.

Das Materialverhalten von Schüttgütern ändert sich mit der Beanspruchungsgeschwindigkeit in Zerkleinerungsmaschinen. Stoffe mit inelastischen Verformungsanteilen zeigen bei höheren Geschwindigkeiten eine größere Neigung zum Sprödbruch. Ausgenutzt wird dieses Verhalten in Zerkleinerungsmaschinen, die die Partikeln mit hoher Geschwindigkeit beanspruchen. Beispiele dafür sind Strahlmühlen und Hochgeschwindigkeits-Prallmühlen bzw. -Pralltellermühlen. Bedingt durch die hohen Geschwindigkeiten und damit auch der Beschleunigungen ist der Leistungseintrag bezogen auf den Durchsatz bei solchen Mühlen im allgemeinen aber relativ hoch.

Eine weitere Möglichkeit ist der Einsatz von Zerkleinerungsmaschinen, die ermöglichen den Feststoff durch mehrachsige Spannungszustände zu beanspruchen. Mehrachsige Spannungszustände können unter bestimmten Voraussetzungen zu einer Änderung des Materialverhaltens des Feststoffes führen. Der Feststoff verhält sich dann spröd im Gegensatz zu elastisch-plastisch bei einachsigen Spannungszuständen. Angewendet wird der Einsatz von mehrachsigen Spannungszuständen bei Formkörpern oder sehr groben Partikeln für das Recycling. Bei kleineren Partikeln ist es technisch nicht möglich mehrachsige Spannungszustände zu erzeugen. Dieser Weg bleibt damit für die Erzeugung von sehr feinen Partikeln verschlossen.

Bei bestimmten Zerkleinerungsverfahren werden Mahlhilfsmittel zu den zu zerkleinernden Stoffen zugesetzt. Diese Mahlhilfsmittel bewirken eine effektivere Zerkleinerung, die zu größeren Feinheiten oder einem geringeren Energiebedarf der Zerkleinerung führen. Mahlhilfsmittel werden nur in Zerkleinerungsmaschinen eingesetzt, die die Partikel als Gutbett beanspruchen. Ein Einsatz in Maschinen, in denen die Bedingungen einer Einzelpartikelzerkleinerung vorherrschen (z. B. Hammermühlen, Strahlmühlen, Prallmühlen, Pralltellermühlen) führt zu keiner Verbesserung der Zerkleinerungswirkung. Durch die Mahlhilfsmittel werden die Fließeigenschaften der partikulären Systeme in den Zerkleinerungsmaschinen beeinflußt. Erreicht wird das durch eine Änderung der Wechselwirkungskräfte (van der Waals Kräfte, elektrostatische Kräfte, kapillare Haftkräfte) zwischen den Partikeln über eine Adsorption dieser Stoffe an der Oberfläche der zu zerkleinernden Schüttgüter. Beispiele für Mahlhilfsmittel sind Stearinsäure, Alkohole, Amine und Carboxylate bei der Trockenmahlung sowie Polyacrylamide, Polyacrylsäuren und Natriumsilikat bei der Naßmahlung.

Die sogenannte Reaktivmahlung wird eingesetzt um chemische Reaktionen zu ermöglichen oder zu beschleunigen. Die Wirkung der Reaktivmahlung beruht darauf, daß frisch gebrochene Oberflächen von Feststoffen erhöhte chemische Aktivitäten aufweisen können. Bringt man eine solche Oberfläche mit einem Reaktionspartner in Kontakt können im Vergleich zu einer nicht frisch gebrochenen Oberfläche Reaktionen schneller ablaufen oder besser kontrolliert werden. Das Ziel einer Reaktivmahlung besteht in einer kontrollierten Erzeugung von definierten chemischen Verbindungen mit einer bestimmten Ausbeute durch bekannte chemischen Reaktionen. Die Reaktivmahlung hat nicht das Ziel bestimmte Feinheiten zu erreichen.

Im Dokument RU 2060882 C1 wird der Aufschluß von gebrauchten, metallverstärkten Gummiprodukten für das Recycling beschrieben. Ein Merkmal des dort beschriebenen Verfahrens ist der Einsatz von Ozon. Das Ziel des beschriebenen Verfahrens ist die Trennung von Metall und Gummi und nicht die Erzeugung einer bestimmten Feinheit des Endproduktes.

Die eingeführten Verfahren zur Erzeugung von großen Feinheiten besitzen jeweils spezifische Nachteile für die Zerkleinerung von Materialien mit zähem Stoffverhalten. Der Erfindung lag daher die Aufgabe zugrunde die Effektivität der Zerkleinerung von Schüttgütern zu erhöhen. Das betrifft sowohl die Erzeugung von Partikelgrößen, die mit anderen Verfahren nicht erzeugt werden können, als auch die Erhöhung des Durchsatzes verbunden mit einer Verringerung der notwendigen Zerkleinerungsarbeit.

Diese Aufgabe wird erfindungsgemäß dadurch gelöst, daß man die zu zerkleinernden Schüttgüter vor oder während der Beanspruchung mit Oxidationsmitteln, die ein Oxidationspotential größer gleich 1,5 V besitzen, behandelt oder einer Korona-, UV- oder Plasmabehandlung unterwirft. Das Schüttgut kann dabei ruhen oder bewegt werden.

Gegenstand der Erfindung ist daher ein Verfahren zur Zerkleinerung von Schüttgütern aus künstlichen Polymeren, die kein gummielastisches Verhalten besitzen, durch mechanische, thermische oder elektromagnetische Beanspruchung der Schüttgüter, dadurch gekennzeichnet, daß die Schüttgüter vor und/oder während der Beanspruchung mit Oxidationsmitteln, die ein Redoxpotential größer 1,5 V besitzen, behandelt werden oder daß sie einer Korona-, UV- oder Plasmabehandlung unterworfen werden, ohne daß eine vollständige Oxidation des künstlichen Polymeren eintritt.

Gegenstand der Erfindung ist ebenfalls ein Verfahren zur Zerkleinerung von Schüttgütern aus künstlichen Polymeren, die gummielastisches Verhalten besitzen durch mechanische, thermische oder elektromagnetische Beanspruchung der Schüttgüter, dadurch gekennzeichnet, daß die Schüttgüter vor und / oder während der Beanspruchung mit Oxidationsmitteln behandelt werden, die ausgewählt sind aus der Gruppe bestehend aus Permangansäure, Wasserstoffperoxid, Silbersalze, Peroxidischwefelsäure, Ozon, Atomarer Sauerstoff oder Fluor, ohne daß eine vollständige Oxidation des künstlichen Polymeren eintritt.

Besondere Ausführungsformen sind in den Unteransprüchen offenbart. Es können auch einzelne oder mehrere der in den Unteransprüchen offenbarten Merkmale jeweils für sich oder in Kombination zusammen mit den Hauptansprüchen erfinderische Lösungen der Erfindung zugrundeliegenden Aufgabe darstellen, und es sind auch diese Merkmale beliebig kombinierbar.

Diese Behandlung der Oberflächen von Schüttgütern führt überraschenderweise oft zu einer Erhöhung der Effektivität bei der Zerkleinerung der Schüttgüter. Dies kann sich einerseits in einer vermehrten Erzeugung von Feinstkom als auch in einer Erhöhung des Durchsatzes durch eine gegebene Zerkleinerungsmaschine und damit einer Verringerung des notwendigen Leistungseintrages zeigen. Durch die Behandlung nur einer dünnen Oberflächenschicht der Schüttgüter wird gewährleistet, daß keine vollständige Oxidation auftritt. Für die apparative Realisierung der Behandlung der Oberflächen von Schüttgütern gibt es eine Vielzahl von Möglichkeiten, die im folgendem näher erläutert werden.

Bei der Behandlung mit Oxidationsmitteln werden gasförmige, flüssige, feste oder in einem Lösungsmittel gelöste Oxidationsmittel oder Oxidationsmittel-Gemische mit dem Schüttgut in Kontakt gebracht. Die physikalische Behandlung der Oberflächen kann mittels UV-Strahlung, Korona-Behandlung oder Plasma-Behandlung erfolgen.

Die Behandlung von Schüttgütern vor der Zerkleinerung mit einem gasförmigen, flüssigen oder in einem Lösungsmittel gelösten Oxidationsmittel oder Oxidationsmittel-Gemisch erfolgt vorzugsweise in einer ruhenden oder bewegten Schüttung oder in einer Wirbelschicht. Dabei durchströmt das Oxidationsmittel die Schüttung oder die Wirbelschicht. Im Falle einer Wirbelschicht erfolgt die Anströmung von unten. In einem Wirbelbett ist die Kontaktierung Oxidationsmittel-Feststoff intensiver als die in einem Festbett aber auch aufwendiger zu realisieren.

Infolge einer möglichen elektrostatischen Aufladung und der bei brennbaren Produkten damit verbundenen Explosionsgefahr bei gasförmigen Oxidationsmitteln sowie bei genügend feinen Partikelgrößenverteilungen ist es aber oft erforderlich ein Festbett einzusetzen. Die Wirbelschicht oder das Festbett können erfindungsgemäß sowohl chargenweise als auch kontinuierlich betrieben werden. Erfindungsgemäß werden bei der Behandlung mit gasförmigen und flüssigen Oxidationsmitteln oder Oxidationsmittelgemischen oder gelösten Oxidationsmitteln Temperaturen zwischen -196 °C und 400 °C, vorzugsweise zwischen 10 und 30 °C eingehalten. Das Verfahren kann erfindungsgemäß bei jedem Druck angewendet werden, vorzugsweise bei 0,5 bis 2 bar absolut, bei Kontaktzeiten des Oxidationsmittels mit dem Feststoff im Bereich von 1 s bis 600 min, vorzugsweise bei 1 min bis 30 min und Konzentrationen des Oxidationsmittels im Fall von gelösten Oxidationsmitteln im Bereich von 0,001 bis 100 %, vorzugsweise bei 0,5 bis 10 %. Nach der Behandlung des Feststoffes mit dem Oxidationsmittel wird das Schüttgut unter Zuführung von Energie zerkleinert. Die Energiezuführung kann mechanischer, thermischer oder elektromagnetischer Natur sein. Es können zum Beispiel alle Mühlen nach dem Stand der Technik eingesetzt werden. Zum Einsatz können zum Beispiel Strahl-, Hochgeschwindigkeitsprall-, Teller- oder Hammermühlen kommen.

Die Behandlung des Schüttgutes vor der Zerkleinerung mit einem festen Oxidationsmittel erfolgt vorzugsweise in einem angepaßten Feststoffmischer oder in einer Wirbelschicht. Als Feststoffmischer können zum Beispiel Schubmischer, Wurfmischer oder Intensivmischer sowie andere Bauarten eingesetzt werden. Erfindungsgemäß werden bei der Behandlung mit festen Oxidationsmitteln oder Oxidationsmittelgemischen Temperaturen zwischen -196 °C und 400 °C, vorzugsweise zwischen 10 und 30 °C eingehalten. Das Verfahren kann erfindungsgemäß bei jedem Druck angewendet werden, vorzugsweise bei 0,5 bis 2 bar absolut, bei Kontaktzeiten des Oxidationsmittels mit dem Feststoff im Bereich von 1 s bis 600 min, vorzugsweise bei 1 min bis 30 min und einer Menge zwischen 0,0001 g Oxidationsmittel pro kg Schüttgut bis 0,5 kg Oxidationsmittel pro kg Schüttgut. Nach der Behandlung des Schüttgutes mit dem Oxidationsmittel wird das Schüttgut wie nach einer Behandlung mit gasförmigen oder flüssigen Oxidationsmitteln (s. o.) zerkleinert. Vor oder nach einer Behandlung kann es erforderlich sein, daß nicht verbrauchtes Oxidationsmittel vom Schüttgut abgetrennt werden muß. Die Abtrennung kann dabei nach dem Stand der Technik in Klassiermaschinen (z. B. Siebmaschinen oder Sichter) oder Sortiermaschinen (z. B. Dichtesortiermaschinen, Magnetscheider, Elektroscheider) ausgeführt werden.

Die Kontaktierung des zu zerkleinernden Schüttgutes mit dem Oxidationsmittel während der Zerkleinerung erfolgt zum Beispiel in entsprechend angepaßten Zerkleinerungsmaschinen. Dabei ist eine mögliche Staubexplosionsgefahr infolge einer elektrostatischen Aufladung oder infolge Funkenflug durch schnell bewegte Maschinenteile bei gasförmigen Oxidationsmitteln zu berücksichtigen.

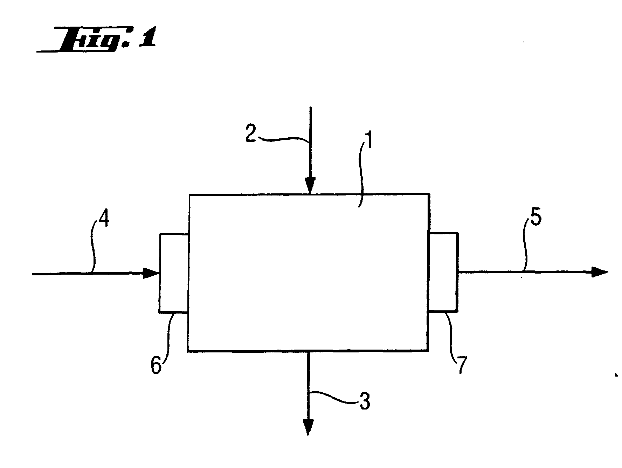

Eine Möglichkeit für die erfindungsgemäße Behandlung des Schüttgutes mit dem Oxidationsmittel während der Zerkleinerung ist die Durchleitung von gasförmigen oder flüssigen Oxidationsmitteln durch eine mit dem Mahlgut gefüllte Trommelmühle 1 wie es schematisch in Figur 1 dargestellt ist. Vorzugsweise anzuwenden ist dabei der Batch-Betrieb, da in diesem Fall eine einfach zu realisierende Abdichtung des mit dem Oxidationsmittel gespülten Mahlraumes gegen die Umgebung möglich ist. Die Einleitung 2 und Ausschleusung 3 des Oxidationsmittels kann über entsprechende Drehdurchführungen an den Stirnseiten der Trommelmühle erfolgen. Ein kontinuierlicher Eintrag 4 und Austrag 5 des Schüttgutes wird erfindungsgemäß dadurch realisiert, daß eine Schüttgutschleuse 6 nach dem Stand der Technik vor der Mühle und eine weitere Schüttgutschleuse 7 nach dem Stand der Technik nach der Trommelmühle eingesetzt wird. Als Schüttgutschleusen können z. B. Zellenradschleusen oder Kammerschleusen sowie andere Bauarten eingesetzt werden.

Die Kontaktierung des Schüttgutes mit festen Oxidationsmitteln während der Zerkleinerung kann erfindungsgemäß z. B. derart realisiert werden, daß das Oxidationsmittel vor der Zerkleinerungsmaschine mit dem Schüttgut gemischt wird oder eine Dosierung des Oxidationsmittels in die Zerkleinerungsmaschine erfolgt. Die Mischung des Schüttgutes kann in allen Feststoffmischem nach dem Stand der Technik erfolgen. Die Abtrennung von nicht verbrauchten Oxidationsmittel erfolgt dabei wie bei der Abtrennung von festen Oxidationsmitteln vor der Zerkleinerung (siehe oben).

Bei bestimmten Schüttgütern ist es von Vorteil das Schüttgut vor und während der Zerkleinerung mit einem Oxidationsmittel zu behandeln. Erfindungsgemäß können dabei unterschiedliche Oxidationsmittel für die Behandlung vor und während der Zerkleinerung eingesetzt werden.

Erfindungsgemäß können künstliche organische Stoffe besonders gut zerkleinert werden. Beispiele für erfindungsgemäß zerkleinerbare polymere organische Stoffe sind : Cellulosederivate, Polyacetylen, Polyacrylate, Polyamide, Polyaromate, Polyester, Polyether, Polyketon, Polyolefine, Polyurethane, Polyvinyle, Copolymere oder Mischungen dieser Kunststoffe.

Gegenstand der Erfindung sind auch derartig hergestellte Schüttgüter, Pulver und Partikelsysteme.

Die Erfindung wird anhand folgender Beispiele näher erläutert :

### Beispiel 1

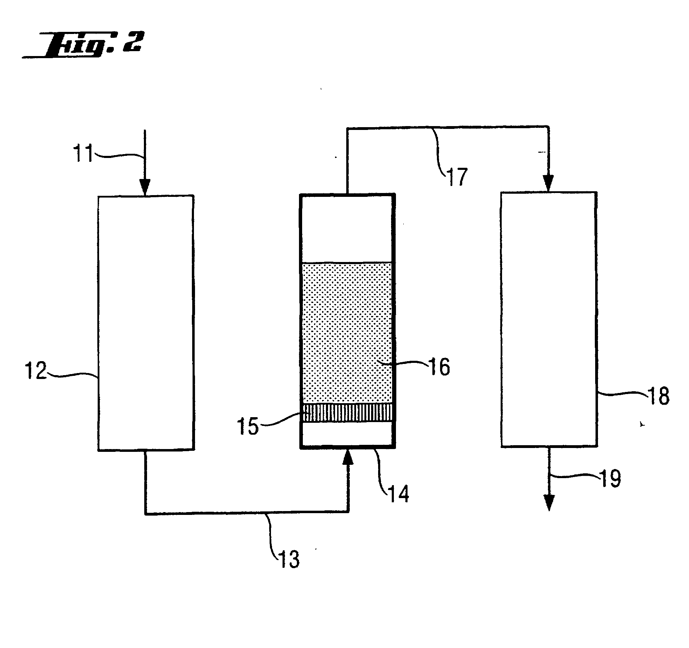

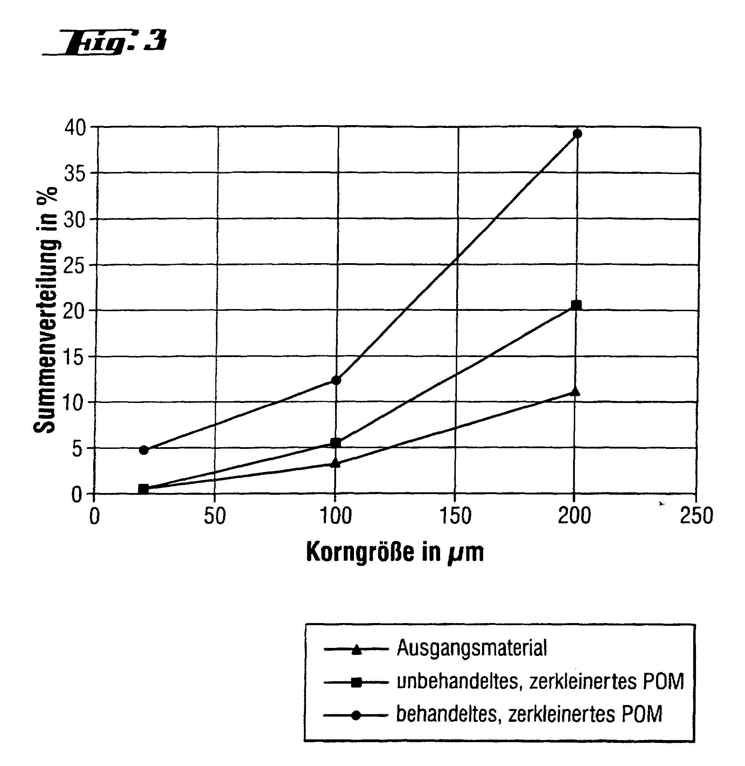

In einer Anlage nach Figur 2, aufweisend einen Ozongenerator 12, Glasschuß 14 mit Frittenboden 15 und Ozonfilter 18, der über eine Leitung 17 mit den Glasschuß 14 verbunden ist, wird ein Polyoxymethylen (POM) 16 mit Ozon behandelt. Der Glasschuß 14 besitzt einen Durchmesser von 100 mm. In den Ozongenerator wird Luft 11 eingeleitet und nach dem Ozonfilter 18 wird die Luft 19 wieder aus der Anlage ausgeblasen. Die Partikelgrößenverteilung des Ausgangsmaterials ist in Figur 3 dargestellt. Das POM 16 wird in den Glasschuß gegeben und die Behandlung derartig realisiert, daß ein Ozon-Luft-Gemisch 13 von unten in das Festbett eingeleitet wird. Die Gasgeschwindigkeit beträgt 0,01 m/s, die Temperatur 25 °C, der Druck 1 bar und die Ozonkonzentration 1,6 g/m³. Die Behandlungszeit beträgt 30 min. Nach der Behandlung wird das POM 16 aus dem Glasschuß 14 entnommen und in einer Hammermühle (Hersteller: Retsch, Typ: DR 75, Siebeinsatz: 0,5 mm) bei einem Durchsatz von 100 g/min zerkleinert. Die dabei erzeugte Partikelgrößenverteilung zeigt Figur 3. Zum Vergleich ist die Partikelgrößenverteilung des in der Hammermühle unter gleichen Parametern zerkleinerten, nicht behandelten POM's ebenfalls in das Diagramm eingetragen.

Deutlich ist der Einfluß der Behandlung auf das Zerkleinerungsergebnis zu erkennen. Im Gegensatz zum unbehandelten POM wird das behandelte POM in der Hammermühle feiner zerkleinert.

### Beispiel 2

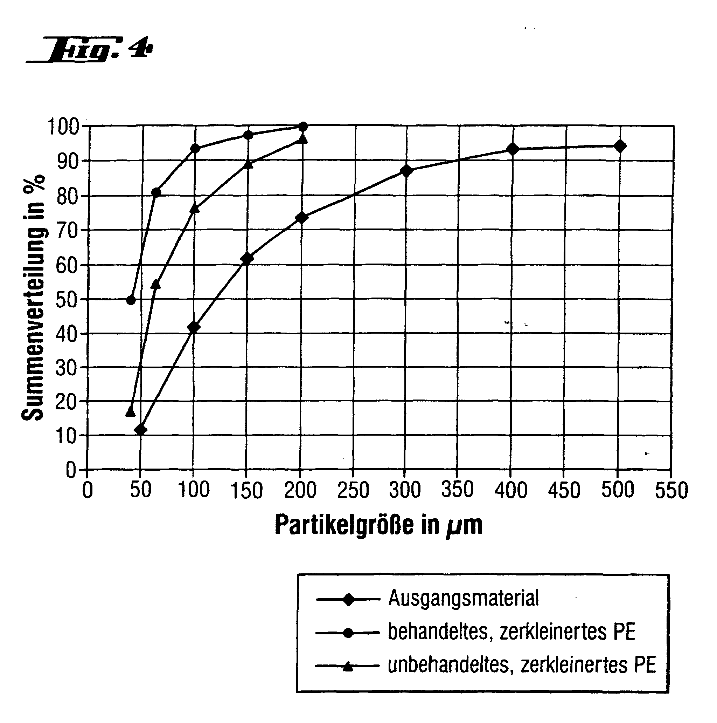

In einer Anlage nach Figur 2, bestehend aus Ozongenerator, Glasschuß mit Frittenboden und Ozonfilter wird ein Polyethylen (PE) mit Ozon behandelt. Die Partikelgrößenverteilung des Ausgangsmaterials ist in Figur 4 dargestellt. Das PE wird in den Glasschuß gegeben und die Behandlung derartig realisiert, daß ein Ozon-Sauerstoff-Gemisch von unten in das Festbett eingeleitet wird. Die Gasgeschwindigkeit beträgt 0,02 m/s, die Temperatur 25 °C, der Druck bar und die Ozonkonzentration 1,6 g/m³. Die Behandlungszeit beträgt 60 min. Nach der Behandlung wird das PE aus dem Glasschuß entnommen und in einer Strahlmühle (Hersteller: Micro-Macinazione SA, Typ: Chrispo-Jet 200, Mahlraumdurchmesser: 200 mm, Gasdruck: 6 bar) bei einem Durchsatz von 0,4 kg/h zerkleinert. Die dabei erzeugte Partikelgrößenverteilung zeigt Figur 4. Zum Vergleich ist die Partikelgrößenverteilung des in der Strahlmühle unter gleichen Parametern zerkleinerten, nicht behandelten PE ebenfalls in das Diagramm eingetragen. Deutlich ist der Einfluß der Behandlung auf das Zerkleinerungsergebnis zu erkennen.

## Patentansprüche

1. Verfahren zur Zerkleinerung von Schüttgütern aus künstlichen Polymeren, die kein gummielastisches Verhalten besitzen, durch mechanische, thermische oder elektromagnetische Beanspruchung der Schüttgüter, **dadurch gekennzeichnet, daß** eine dünne Oberflächenschicht der Schüttgüter vor und/oder während der Beanspruchung mit Oxidationsmitteln, die ein Redoxpotential größer 1,5 V besitzen, behandelt oder einer Korona-, UV- oder Plasmabehandlung unterworfen wird, ohne daß eine vollständige Oxidation des künstlichen Polymeren eintritt.

2. Verfahren zur Zerkleinerung von Schüttgütern aus künstlichen Polymeren, die gummielastisches Verhalten besitzen, durch mechanische, thermische oder elektromagnetische Beanspruchung der Schüttgüter, **dadurch gekennzeichnet, daß** eine dünne Oberflächenschicht der Schüttgüter vor und/oder während der Beanspruchung mit Oxidationsmitteln behandelt wird, die ausgewählt sind aus der Gruppe bestehend aus Permangansäure, Wasserstoffperoxid, Silbersalze, Peroxidischwefelsäure, Atomarer Sauerstoff oder Fluor, ohne daß eine vollständige Oxidation des künstlichen Polymeren eintritt.

3. Verfahren nach einem der vorhergehenden Ansprüche, **dadurch gekennzeichnet, daß** das oder jedes Oxidationsmittel gasförmig verwendet wird.

4. Verfahren nach den Ansprüchen 1 oder 2, **dadurch gekennzeichnet, daß** das oder jedes Oxidationsmittel flüssig verwendet wird.

5. Verfahren nach den Ansprüchen 1 oder 2, **dadurch gekennzeichnet, daß** das oder jedes Oxidationsmittel fest verwendet wird.

6. Verfahren nach den Ansprüchen 1 oder 2, **dadurch gekennzeichnet, daß** das oder jedes Oxidationsmittel in einem Lösungsmittel gelöst verwendet wird.

7. Verfahren nach den Ansprüchen 1 oder 2, **dadurch gekennzeichnet, daß** Gemische von Oxidationsmitteln verwendet werden.

8. Verfahren nach den Ansprüchen 3 bis 7, **dadurch gekennzeichnet, daß** die Kontaktierung des oder jeden Oxidationsmittels mit dem Schüttgut vor, während oder vor und während der Zerkleinerung in einer Wirbelschicht erfolgt.

9. Verfahren nach den Ansprüchen 3 und 4 oder 6 und 7, **dadurch gekennzeichnet, daß** die Kontaktierung des oder jeden Oxidationsmittels mit dem Schüttgut vor der Zerkleinerung in einem Festbett erfolgt.

10. Verfahren nach den Ansprüchen 3 bis 7, **dadurch gekennzeichnet, daß** die Kontaktierung des oder jeden Oxidationsmittels mit dem Schüttgut vor der Zerkleinerung in einem Feststoffmischer erfolgt.

11. Verfahren nach Anspruch 10, **dadurch gekennzeichnet, daß** die Kontaktierung des oder jeden Oxidationsmittels mit dem Schüttgut vor der Zerkleinerung in einem Schneckenmischer, Pflugscharmischer, Schubmischer, Paddelmischer, Intensivmischer oder Freifallmischer erfolgt.

12. Verfahren nach Anspruch 1, **dadurch gekennzeichnet, daß** Permangansäure, Wasserstoffperoxid, Silbersalze, Ozon, Peroxidischwefelsäure, Atomarer Sauerstoff oder Fluor als Oxidationsmittel verwendet werden.

13. Verfahren nach Anspruch 12, **dadurch gekennzeichnet, daß** Ozon als Oxidationsmittel in Sauerstoff oder Luft verwendet wird.

14. Verfahren nach einem der vorhergehenden Ansprüche, **dadurch gekennzeichnet, daß** die Zerkleinerung durch Prall, Schlag, Scherung oder Druck erfolgt.

15. Verfahren nach Anspruch 14, **dadurch gekennzeichnet, daß** die Zerkleinerung in einer Strahlmühle oder Pralltellermühle erfolgt.

16. Verfahren nach einem der vorhergehenden Ansprüche, **dadurch gekennzeichnet, daß** Cellulosederivate, Polyacetylen, Polyacrylate, Polyamide, Polyaromate, Polyester, Polyether, Polyketon, Polyolefine, Polyurethane, Polyvinyle, Copolymere oder Mischungen dieser Kunststoffe zerkleinert werden.

17. Verfahren von nach einem der Ansprüche 1 bis 16 **dadurch gekennzeichnet, daß** Schüttgut, Pulver oder partikuläre Systeme zerkleinert werden.

18. Schüttgut oder Pulver oder partikuläre Systeme, erhältlich nach einem Verfahren entsprechend einem oder mehreren der vorangehenden Ansprüche.

## Claims

1. Process for the comminution of bulk materials comprising synthetic polymers which do not have an elastomeric behaviour by mechanical, thermal or electromagnetic loading of the bulk materials, **characterized in that** it comprises treating a thin surface layer of the bulk materials, before and/or during the loading, with oxidants which have a redox potential of greater than 1.5 V or subjecting it to corona, UV or plasma treatment without complete oxidation of the synthetic polymer taking place.

2. Process for the comminution of bulk materials comprising synthetic polymers which have an elastomeric behaviour by mechanical, thermal or electromagnetic loading of the bulk materials, **characterized in that** it comprises treating a thin surface layer of the bulk materials, before and/or during the loading, with oxidants selected from the group consisting of permanganic acid, hydrogen peroxide, silver salts, peroxydisulphuric acid, atomic oxygen or fluorine without complete oxidation of the synthetic polymer taking place.

3. Process according to one of the preceding claims, **characterized in that** the or each oxidant is used in gaseous form.

4. Process according to Claim 1 or 2, **characterized in that** the or each oxidant is used in liquid form.

5. Process according to Claim 1 or 2, **characterized in that** the or each oxidant is used in solid form.

6. Process according to Claim 1 or 2, **characterized in that** the or each oxidant is used dissolved in a solvent.

7. Process according to Claim 1 or 2, **characterized in that** mixtures of oxidants are used.

8. Process according to Claims 3 to 7, **characterized in that** the contacting of the or each oxidant with the bulk material is carried out in a fluidized bed before, during or before and during the comminution.

9. Process according to Claims 3 and 4 or 6 and 7, **characterized in that** the contacting of the or each oxidant with the bulk material is carried out in a fixed bed before the comminution.

10. Process according to Claims 3 to 7, **characterized in that** the contacting of the or each oxidant with the bulk material is carried out in a solids mixer before the comminution.

11. Process according to Claim 10, **characterized in that** the contacting of the or each oxidant with the bulk material is carried out in a screw mixer, ploughshare mixer, shear mixer, paddle mixer, intensive mixer or free-fall mixer before the comminution.

12. Process according to Claim 1, **characterized in that** permanganic acid, hydrogen peroxide, silver salts, ozone, peroxydisulphuric acid, atomic oxygen or fluorine are used as oxidant.

13. Process according to Claim 12, **characterized in that** ozone is used as oxidant in oxygen or air.

14. Process according to one of the preceding claims, **characterized in that** the comminution is carried out by impact, shear or pressure.

15. Process according to Claim 14, **characterized in that** the comminution is carried out in a jet mill or impact disc mill.

16. Process according to one of the preceding claims, **characterized in that** cellulose derivatives, polyacetylene, polyacrylates, polyamides, polyaromatic compounds, polyesters, polyethers, polyketone, polyolefins, polyurethanes, polyvinyl compounds, or copolymers or mixtures of these plastics, are comminuted.

17. Process according to one of Claims 1 to 16, **characterized in that** bulk materials, powders or particulate systems are comminuted.

18. Bulk material, powder or particulate system obtainable by a process according to one or more of the preceding claims.

## Revendications

1. Procédé de fragmentation de produits en vrac en polymères synthétiques, qui n'ont pas l'élasticité du caoutchouc, par sollicitation mécanique, thermique ou électromagnétique des produits en vrac, **caractérisé en ce que** l'on traite une mince couche superficielle des produits en vrac avant et/ou pendant la sollicitation par des agents oxydants qui ont un potentiel redox supérieur à 1,5 V ou on les soumet à un traitement par effet couronne, par UV ou par plasma sans que se produise une oxydation complète des polymères synthétiques.

2. Procédé de fragmentation de produits en vrac en polymères synthétiques qui ont l'élasticité du caoutchouc par sollicitation mécanique, thermique ou électromagnétique des produits en vrac, **caractérisé en ce que** l'on traite une mince couche superficielle des produits en vrac avant et/ou pendant la sollicitation par des agents oxydants, qui sont choisis dans le groupe constitué de l'acide permanganique, du peroxyde d'hydrogène, de sels d'argent, d'acide peroxydisulfurique, de l'oxygène atomique ou du fluor, sans que se produise une oxydation complète des polymères synthétiques.

3. Procédé suivant l'une des revendications précédentes, **caractérisé en ce que** l'on utilise le ou chaque agent oxydant sous forme gazeuse.

4. Procédé suivant les revendications 1 ou 2, **caractérisé en ce que** l'on utilise l'agent oxydant ou chaque agent oxydant sous forme liquide.

5. Procédé suivant les revendications 1 ou 2, **caractérisé en ce que** l'on utilise l'agent oxydant ou chaque oxydant sous forme solide.

6. Procédé suivant les revendications 1 ou 2, **caractérisé en ce que** l'on utilise l'agent oxydant ou chaque oxydant dissous dans un solvant.

7. Procédé suivant les revendications 1 ou 2, **caractérisé en ce que** l'on utilise des mélanges d'agents oxydants.

8. Procédé suivant les revendications 3 à 7, **caractérisé en ce que** l'on effectue la mise en contact de l'agent oxydant ou de chaque agent oxydant avec le produit en vrac pendant ou avant et pendant la fragmentation dans un lit fluidisé.

9. Procédé suivant les revendications 3 et 4 ou 6 et 7, **caractérisé en ce que** l'on effectue la mise en contact de l'agent oxydant ou de chaque agent oxydant avec le produit en vrac avant la fragmentation dans un lit fixe.

10. Procédé suivant l'une des revendications 3 à 7, **caractérisé en ce que** l'on effectue la mise en contact de l'agent oxydant ou de chaque agent oxydant avec le produit en vrac avant la fragmentation dans un mélangeur de matière solide.

11. Procédé suivant la revendication 10, **caractérisé en ce que** l'on effectue la mise en contact de l'agent oxydant ou de chaque agent oxydant avec le produit en vrac avant la fragmentation dans un mélangeur à vis, dans un mélangeur à soc de charrue, dans un mélangeur à cisaillement, dans un mélangeur à palette, dans un mélangeur intensif ou dans un mélangeur à chute libre.

12. Procédé suivant la revendication 1, **caractérisé en ce que** l'on utilise de l'acide permanganique, du peroxyde d' hydrogène, des sels d'argent, de l'ozone, de l'acide peroxydisulfurique, de l'oxygène atomique ou du fluor comme agent d'oxydation.

13. Procédé suivant la revendication 12, **caractérisé en ce que** l'on utilise de l'ozone comme agent d'oxydation dans de l'oxygène ou dans de l'air.

14. Procédé suivant l'une des revendications précédentes, **caractérisé en ce que** l'on effectue la fragmentation par choc, par percussion, par cisaillement ou par pression.

15. Procédé suivant la revendication 14, **caractérisé en ce que** l'on effectue la fragmentation dans un broyeur à jets ou dans un broyeur à couteaux fixe et mobile.

16. Procédé suivant l'une des revendications précédentes, **caractérisé en ce que** l'on fragmente des dérivés de cellulose, un polyacétylène, un polyacrylate, polyamide, un produit polyaromatique, un polyester, un polyétheroxyde, une polycétone, une polyoléfine, un polyuréthane, un polyvinyle, des copolymères ou des mélanges de ces matières plastiques.

17. Procédé suivant l'une des revendications 1 à 16, **caractérisé en ce que** l'on fragmente du produit en vrac, de la poudre ou des systèmes particulaires.

18. Produit en vrac ou poudre ou systèmes particulaires obtenus par un procédé suivant l'une ou plusieurs des revendications précédentes.
